Europäisches Patentamt

European Patent Office

Office européen des brevets

(19)

(11) **EP 0 731 960 B1**

(12) # FASCICULE DE BREVET EUROPEEN

(45) Date de publication et mention
de la délivrance du brevet:
**20.08.2003 Bulletin 2003/34**

(51) Int Cl.⁷: **G06T 15/10**

(86) Numéro de dépôt international:
**PCT/FR95/01237**

(21) Numéro de dépôt: **95932792.5**

(22) Date de dépôt: **26.09.1995**

(87) Numéro de publication internationale:
**WO 96/010805 (11.04.1996 Gazette 1996/16)**

(54) **PROCEDE DE GENERATION D'IMAGES DE SYNTHESE PAR TAMPON SPHERIQUE**

SYNTHETISCHES BILDERZEUGUNGSVERFAHREN MIT SPHÄRISCHEM PUFFER

METHOD FOR GENERATING SYNTHESIS IMAGES BY SPHERICAL BUFFER

(84) Etats contractants désignés:
**DE ES FR GB IT**

(30) Priorité: **30.09.1994 FR 9411736**

(43) Date de publication de la demande:
**18.09.1996 Bulletin 1996/38**

(73) Titulaire: **THOMSON BROADCAST SYSTEMS
95800 Cergy Saint-Christophe (FR)**

(72) Inventeurs:
• **DUSSEUX, Jean-Christophe
F-92402 Courbevoie Cédex (FR)**

• **BLONDE, Laurent
F-92402 Courbevoie Cédex (FR)**

(74) Mandataire: **Ruellan-Lemonnier, Brigitte et al
THOMSON multimedia,
46 quai A. Le Gallo
92648 Boulogne Cédex (FR)**

(56) Documents cités:
**EP-A- 0 251 800**

**EP 0 731 960 B1**

## Description

La présente invention concerne un procédé de génération d'images de synthèse par tampon sphérique.

Elle se rapporte notamment au domaine du traitement d'images par calculateurs numériques ou calculateurs graphiques travaillant à partir de base de données décrivant une scène en 3 dimensions ou 4 dimensions (espace et temps). Les images de synthèse obtenues selon l'invention peuvent être exploitées comme images des distances, pour le calcul de la propagation d'énergie lumineuse ou comme images de synthèse finale à visualiser.

Les procédés de génération d'images de synthèse utilisant la représentation surfacique pour les objets solides et la projection plane ou hémisphérique, c'est à dire la projection de l'image sur un ou plusieurs plans ou sur une demi-sphère sont connus. Cette projection est par exemple décrite dans l'article "The hémisphere radiosity method : a tale of 2 algorithms" de Stephen H. Spencer dans la revue Proceedings in Eurographics 1991. Ce procédé consiste à projeter sur un hémisphère centré autour d'un point de vue de la scène en 3 D et qui est le point d'observation, les polygones sélectionnés correspondant à cette représentation surfacique, appelés également facettes.

EP-0-A 251 800 propose une méthode et un dispositif pour dériver des images de radiation utilisant une mémoire tampon de lumière. La méthode consiste à projeter sur un hémipolyèdre centré autour d'un point de vue de la scène en 3D, à la place d'une hémisphère tel qu'elle est décrit par Spencer.

D'autre part, la détermination des parties cachées d'une scène en 3 D fait l'objet de nombreuses méthodes également connues. Ainsi une méthode simple pour déterminer les parties visibles des polygones à projeter, connue sous le terme anglo-saxon de "Z - buffer" ou "tampon de profondeur", consiste en un calcul de profondeur ou distance pour chacun des pixels de l'image projetée. Si le polygone considéré fournit une valeur inférieure à celle stockée dans ce "buffer", l'ancienne valeur est remplacée par la nouvelle valeur calculée. Cette technique est exploitée pour des projections planes, c'est à dire que l'échantillonnage correspondant aux pixels de l'image projetée se fait sur une ou plusieurs surfaces planes, par exemple sur un plan situé au voisinage du point de projection dans le cas de l'algorithme de l'hémiplan, sur 5 faces d'un demi-cube dans le cas de l'algorithme de l'hémicube.

Une détermination des parties visibles d'une scène 3 D à partir d'un point d'observation est décrite dans la demande de brevet français n° FR 2 703 803 publié le 14 octobre 1994 et traitant en particulier d'un algorithme permettant, par projection hémisphérique et calcul des intersections des polygones projetés, de déterminer les segments visibles.

La synthèse d'image par projection plane se heurte au problème de recouvrement de spectre également connu sous l'appellation anglo-saxonne d''aliasing". Ce phénomène se traduit par des défauts de qualité de l'image, contours en marche d'escalier, clignotements dus à la disparition aléatoire de petits polygones, contours d'ombre défectueux etc... et provient de l'insuffisance de l'échantillonnage spatial et temporel utilisés.

Il est en partie dû aux distorsions géométriques de projection lors du passage de l'image en 3 D à l'image en 2D se traduisant par un échantillonnage non uniforme pour l'image en 2D. Ces distorsions résultent par exemple de la projection d'un espace 3 D sur une surface plane, projection qui ne respecte pas les angles solides c'est à dire, pour un angle solide donné, fait correspondre une aire de projection différente en fonction de la direction de cet angle solide dans l'espace. Un échantillonnage adaptatif du plan de projection permet alors d'atténuer le phénomène d'aliasing. Cet échantillonnage fait en sorte que l'aire des pixels ainsi créés n'est pas constante mais corresponde à un angle solide projeté à peu prés constant quelle que soit la direction. Mais les résultats, bien sur associés aux filtrages classiques, montrent des limites, car il s'agit d'approximations Une autre solution consiste à projeter la scène sur une demi-sphère, car cette projection respecte les angles solides. Mais la distorsion provient alors de l'étape ultérieure qui doit considérer ces angles solides projetés sur un plan.

Il est également dû, d'une manière plus classique, au passage de l'analogique au numérique, qui implique une perte d'informations. Ce phénomène est surtout présent au contour des facettes, à la frontière de 2 facettes adjacentes et plus particulièrement pour l'information de label de la facette visible car il faut alors choisir une valeur parmi plusieurs pour le pixel correspondant ; pour les 2 autres types d'informations liées au pixel, à savoir distance du point de mire au point de projection et couleur ou valeur d'éclairement du pixel, un filtrage peut atténuer le phénomène. Il est encore plus présent au contour des facettes lors de l'occlusion partielle d'une facette par une autre car le recouvrement d'un pixel par plusieurs facettes ayant des distances et des couleurs totalement différentes rend les filtrages relativement peu efficaces. L'invention objet de la demande de brevet français n° FR 2 703 803 permet de résoudre ce problème en traitant d'une manière analytique les intersections des facettes ou polygones, les trous ou occlusions. Cette méthode peut cependant s'avérer coûteuse en temps de calcul lorsque la base de données est importante. La qualité des résultats est certes excellente mais ne peut être maîtrisée au profit du temps de calcul. Or, si la qualité est recherchée pour des éclairages directs, et il s'agit ici de l'exploitation de l'invention dans le domaine de la radiosité, c'est à dire pour la modélisation de la propagation et échange d'énergie lumineuse ou simulation d'éclairement, elle est beaucoup moins cruciale pour les réflexions, cet éclairage indirect représentant en moyenne une dizaine de pourcents de l'éclairage direct. De plus, cette méthode ne permet pas d'obtenir une image des distances ou une image de synthèse finale.

Il faut enfin noter que les distorsions géométriques précédemment mentionnées lors du passage de l'image en 3D en image en 2D et dues à un angle solide associé aux pixels non constant sur l'ensemble de l'image, entraînent des résultats finalement faux et perturbent l'appréciation des modélisations des systèmes optiques de caméras et capteurs en introduisant des défauts de projection non réalistes.

La présente invention a pour but de pallier les inconvénients précités. A cet effet l'invention a pour objet un procédé de génération d'images de synthèse d'une scène en 3 dimensions constituée d'un ensemble de facettes, vue d'un point d'observation A et selon un axe de vue, caractérisé en ce qu'une projection des facettes est effectuée sur la surface d'une sphère dont le centre est le point d'observation de la scène et en ce qu'un découpage particulier de la surface de la sphère en aires élémentaires, chacune correspondant a un pixel sur la surface sphérique, lui-même associé à un pixel d'une image plane à représenter, est effectué de manière que les projections orthogonales de ces aires sur un plan de référence passant par A et perpendiculaire à l'axe de vue de la scène ont même valeurs .

D'autres caractéristiques et avantages de l'invention apparaîtront ci-après à l'aide de la description qui suit faite en regard des dessins annexés qui représentent :

- la figure 1, un organigramme figurant le procédé de synthèse d'image mis en oeuvre par l'invention. Cet organigramme fait l'objet des planches 1 et 2, repérées figures 1a et 1b.
- la figure 2, un repère de projection d'un point de l'espace.
- la figure 3, une aire élémentaire sur la sphère pour le calcul du facteur de forme.
- la figure 4, les parallèles et méridiens de la sphère.
- la figure 5, l'échantillonnage de la surface de la sphère de projection,
- la figure 6 la méthode du double cache.

L'idée de l'invention est de réaliser une découpe particulière de la surface d'une sphère de projection pour délimiter des aires assignées aux pixels de l'image en 2 D, représentation plane de cette surface sphérique, dont les angles solides projetés sur le plan de référence perpendiculaire à l'axe de vue sont de même valeur quel que soit le pixel.

Dès lors, les résultats obtenus s'affranchissent de distorsions géométriques dues au mode de projection et le phénomène d'aliasing est encore réduit du fait d'un échantillonnage angulaire spécifique. L'algorithme de traitement, de par sa simplicité, permet des calculs rapides, pouvant être adaptés à la qualité d'image requise, par exemple selon des critères d'importance associés aux objets de la scène.

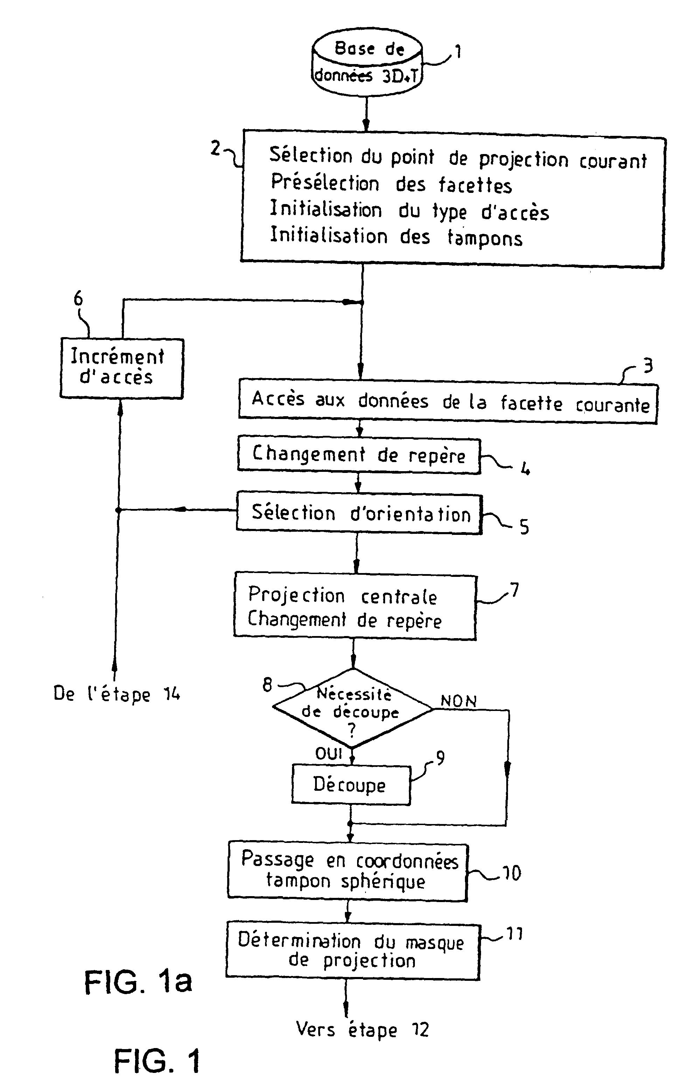

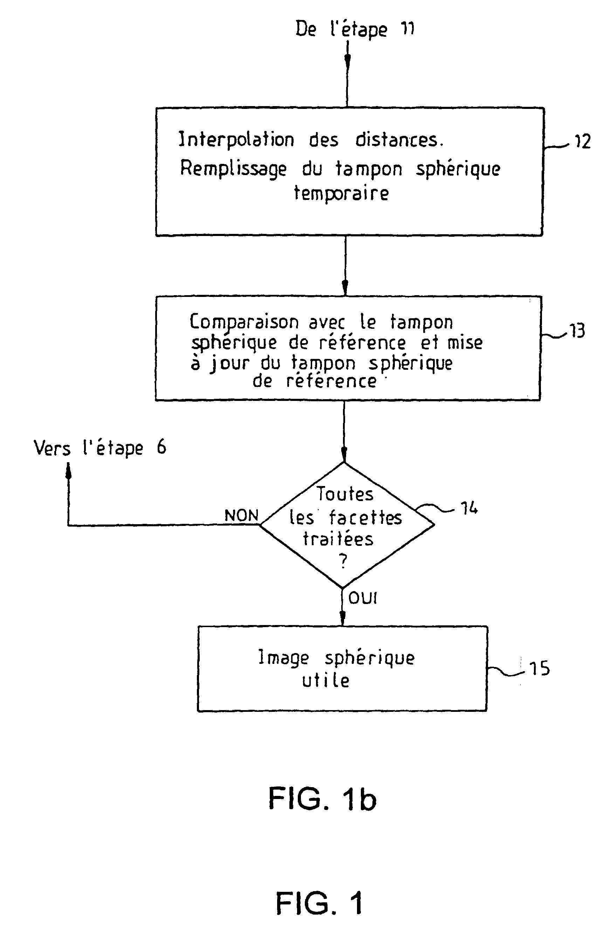

Le procédé de génération d'images de synthèse par tampon sphérique est représenté par un organigramme à la figure 1. A partir d'une base de données représentative d'une scène dans un espace à 4 dimensions sont extraites les données représentatives de la scène à un instant t décrivant un ensemble de polygones plans ou facettes . Ces données disponibles à l'entrée 1 sur l'organigramme sont traitées à l'étape 2 de la manière suivante : un point de vue ou de projection courant de la scène 3D étant sélectionné, une présélection de polygones concernés par le traitement en cours est effectuée en tenant compte d'une hiérarchie de la scène, c'est à dire de la constitution de la scène, du champ d'observation ou volume de vue, de critères d'importance... Cette étape initialise les procédures d'accès aux polygones successifs ainsi que les différents tampons de travail tels que tampons de profondeur.

La 3e étape permet d'accéder aux données de la facette courante qui, dans l'étape suivante 4, sont référencées au point de projection par un changement de repère permettant de passer du repère objet courant au repère du point de projection A sélectionné, appelé repère (A,X,Y,Z), repère orthonormé pour lequel l'axe AZ est la direction de vue.

L'étape 5 est une détermination de l'orientation de la facette relativement au point de projection, cette orientation correspondant à la visibilité ou non de la facette du point et selon la direction d'observation. Il s'agit donc d'une sélection d'orientation, la facette non visible étant éliminée et, dans ce cas, un retour à l'étape 3 est effectué après incrémentation à l'étape 6, permettant de traiter la facette suivante .

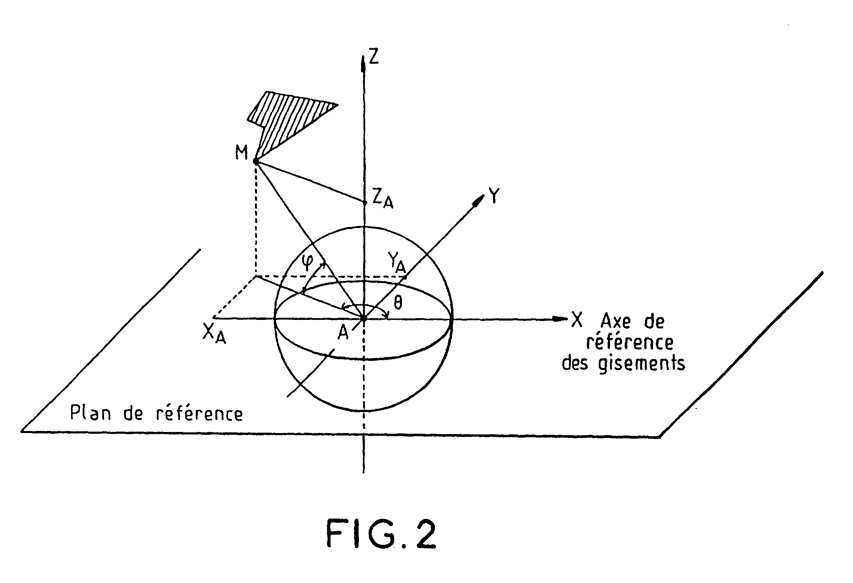

L'étape n° 7 est une projection de la facette courante sélectionnée de la scène en 3D sur une sphère centrée au point de projection A donnant un "polygone" transformé. Chaque sommet M de la facette va être défini dans un repère polaire R (A,θ, φ) de centre, le centre de projection A, d'angle de gisement θ et d'angle de site φ de la manière qui suit. Le plan (A,X,Y) est choisi comme plan de référence des gisements et l'axe AX comme axe de référence du gisement sur ce plan. L'axe AZ est pris comme axe des apex ou pôles de la sphère. Le point M dans le repère (A,X, Y,Z) est représenté à la figure 2.

Pour chacun des sommets projetés sur la sphère est calculée la distance de A à ce sommet ou plus exactement le carré de la distance euclidienne, moins coûteux en temps de calcul puisqu'il n'y a pas de racine carrée à évaluer, puis les angles de site et de gisement dans le repère polaire à partir des coordonnées $X_A$, $Y_A$,$Z_A$ de ce sommet dans le plan (A,X,Y,Z)

site :

$$\varphi = \text{Arc tg } \frac{Z_A}{\sqrt{X_A^2 + Y_A^2}}$$

gisement:

$$\theta = \text{Arc tg } \frac{Y_A}{X_A}$$

Des indéterminations d'angles de site pour $X_A$, $Y_A$ et ZA nuls et de gisement pour $X_A$ et $Y_A$ nuls ou pour $Y_A$ seul nul et $X_A$ négatif comme il sera vu plus loin (gisement pour lequel $\theta = -180°$ ou $+180°$) seront levées lors des traitements de découpe à l'étape 8 et 9.

D'autre part, pour chacun des sommets B est également calculé le produit vectoriel $\overrightarrow{AB} . \overrightarrow{AC}$, B étant le sommet courant traité et C le sommet suivant du contour .

L'étape 8 effectue un test sur la nécessité de découpe de la facette traitée, c'est à dire dans l'un des cas suivants :

- la facette projetée recouvre l'un des apex de la sphère, apex nord correspondant à un site de + 90° ou apex sud pour un site de - 90° (1)
- l'un des sommets de la facette projetée est confondu avec l'un des apex ($X_A$ = YA = 0) (2)
- la facette projetée recouvre une partie d'un demi-cercle de coupure ou méridien de coupure, demi-cercle défini par le point du cercle de référence en gisement, intersection de la sphère avec le plan de référence, pour lequel $\theta = \pm 180°$ et par les apex (3)
- un des sommets projetés est confondu avec un point du demi-cercle de coupure (4).

Ces cas correspondent en effet aux indéterminations d'angles citées précédemment, l'indétermination des cas 3 et 4, c'est à dire un sommet projeté de la facette tel que $Y_A$ est nul et XA est négatif, étant liée au choix du méridien de coupure comme "ligne de coupure" de l'image sphérique pour l'obtention de l'image plane, cette ligne représentant les colonnes extrêmes de l'image plane. On peut dire autrement qu'un "développement" de la sphère en image plane 2D, comme il sera vu à l'étape 10, fait correspondre les apex nord et sud à la ligne supérieure et inférieure de l'image et le méridien de coupure à la colonne de droite et de gauche de l'image créant de ce fait une ambiguïté résolue à l'étape suivante par une génération de points clones.

Cette étape 9 réalise, lorsque nécessaire, une découpe de l'image projetée sur la sphère, en vue de sa projection plane 2D, en créant des points "clones" de ceux déjà existants.

Dans le cas (1), la facette recouvre 1 des apex, et indépendamment des cas suivants (3) et (4) qui sont aussi concernés par ce type de facette, deux points appelés point "clones" sont crées sur la sphère de projection, chacun d'eux ayant la même valeur de site que celui de l'apex recouvert (+ 90° ou - 90°) et des valeurs de gisement adjacentes arbitraires, par exemple les valeurs extrêmes, c'est à dire + 180° et -180°. Les 2 points ainsi crées sont de nouveaux sommets insérés dans le contour des sommets de la facette, entre les points crées dans le cas (3) ou dans le cas (4), générant une nouvelle découpe de la facette par le calcul des côtés reliant ces sommets.

Dans le cas (2), un des sommets est un apex , la projection de ce sommet est remplacée par 2 points clones ayant le même site que l'apex, les gisements étant respectivement ceux du sommet précédent et du sommet suivant lors du parcours des sommets du polygone.

Le cas (3), un côté du polygone coupe le demi-cercle de coupure, conduit à un calcul du point d'intersection de l'arête avec le demi-cercle de coupure. A partir du site calculé du point d'intersection, deux points clones sont crées de part et d'autre de ce demi-cercle de coupure, c'est à dire avec le site calculé et des gisements de + 180° et -180°.

Dans le cas (4) correspondant à un sommet sur le demi-cercle de coupure, si les sommets précédent et suivant , lors du parcours du polygone, se trouvent du même côté par rapport à ce demi-cercle, l'angle de gisement choisi est celui correspondant à ce côté (+180° ou -180°); s'ils se trouvent de part et d'autre de cette frontière, ce sommet est remplacé par deux points clones ayant le même site que ce sommet et des gisements opposés (+180° ou - 180°). C'est cette seule deuxième hypothèse qui est à prendre en compte lorsque pour une facette, le cas (1) et également le cas 4 se produisent.

L'étape 10 réalise, quant à elle, une transposition des valeurs site et gisement de chacun des sommets et clones des facettes projetées sur la sphère en valeurs "ligne" et "colonne" d'une image en deux dimensions.

Cette transposition est liée à une découpe spécifique de la surface de la sphère en aires élémentaires définissant les pixels sur la sphère, la représentation surfacique plane de cette surface sphérique correspondant à une association de ces pixels aux pixels de l'image plane en 2 D à créer comme explicité ci-après. Cette découpe est réalisée de telle manière que les pixels de l'image sphérique ou plane en 2D aient tous la même contribution au facteur de forme (la définition est rappelée ci-après), c'est à dire que la surface de chacun des pixels de l'image sphérique ou plane en 2D correspondant aux aires élémentaires aient leur projection orthogonale sur le plan perpendiculaire à l'axe d'observation, identique.

La découpe à réaliser sur la sphère pour obtenir un facteur de forme constant est explicitée ci-dessous.

Par définition, le facteur de forme $F_{dAi,j}$ de la facette Aj par rapport à l'élément de surface dAi de la facette Ai centré en 0 ou, aux limites, le facteur de forme de la facette Aj par rapport au point 0 et sa "normale", est donné par la relation :

$$F_{dAi,j} = \int_{Aj} \frac{\cos\alpha i \, \cos\alpha j}{\pi r^2} d\, Aj$$

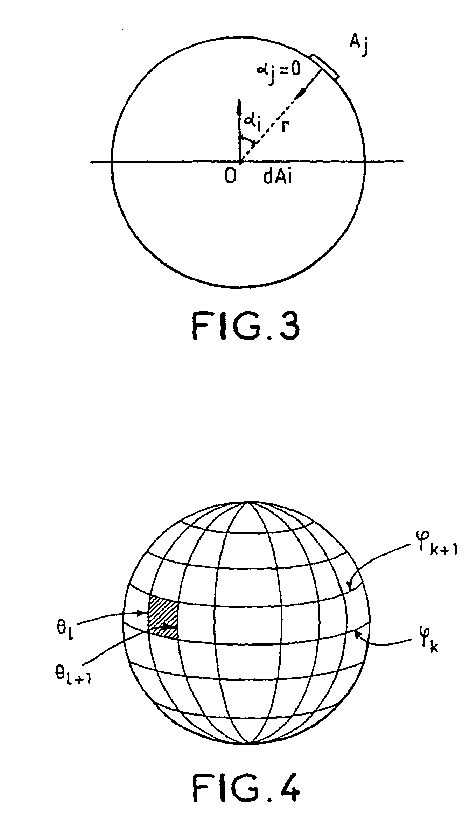

ou $\alpha i$ et $\alpha j$ sont les angles que font respectivement les normales aux facettes Ai et Aj avec la ligne reliant leur centre, r la distance entre ces centres et Aj l'aire de la facette Aj, comme indiqué à la figure 3.

Si la facette Aj est une projection sur la sphère unité de centre 0, représentée à la figure 3, $\alpha j = 0$ quel que soit Aj :

$$F_{dAi,j} = \int_{Aj} \frac{\cos\alpha i}{\pi} d\, Aj$$

Ce facteur de forme correspond à l'angle solide intercepté par la surface Aj à partir du point 0 et projeté sur Ai ,divisé par $\pi$ :

$$F = \frac{\Omega}{\pi} \text{ avec } \Omega = \text{angle solide } \underline{\text{projeté}}.$$

Découpons la sphère en pixels $P_{kl}$ résultant de l'intersection d'une bande de surface sur la sphère définie par deux longitudes d'angles de gisement $\theta_l$ et $\theta_{l+1}$ avec une bande de surface définie par 2 latitudes d'angles de site $\varphi_k$ et $\varphi_{k+1}$ . L'aire d Aj de ce pixel, représentée à la figure 4, est dAj = sin $\varphi$ d$\varphi$ d$\theta$ (avec $\varphi = 90°$ à l'équateur).

Le facteur de forme correspondant à cette aire est

$$F_{dAi,Pkl} = \int_{\varphi k}^{\varphi k+1} \int_{\theta l}^{\theta l+1} \frac{\cos\varphi}{\pi} \sin\varphi \, d\varphi \, d\theta$$
$$= \frac{\theta_{l+1} - \theta_l}{4\pi} (\cos 2\varphi_k - \cos 2\varphi_{k+1})$$

Obtenir un facteur de forme constant pour chacun des pixels ainsi délimités revient à obtenir les égalités :

- $\theta_{l+1} - \theta_l = \Delta\theta = \text{cste} = 2\frac{\pi}{N}$
  si N est le nombre de méridiens, c'est à dire si l varie de 0 à N-1
- $\cos 2\varphi_k - \cos 2\varphi_{k+1} = \text{cste} = \frac{2}{P}$
  si P est le nombre de parallèles c'est à dire si k varie de 0 à P-1.

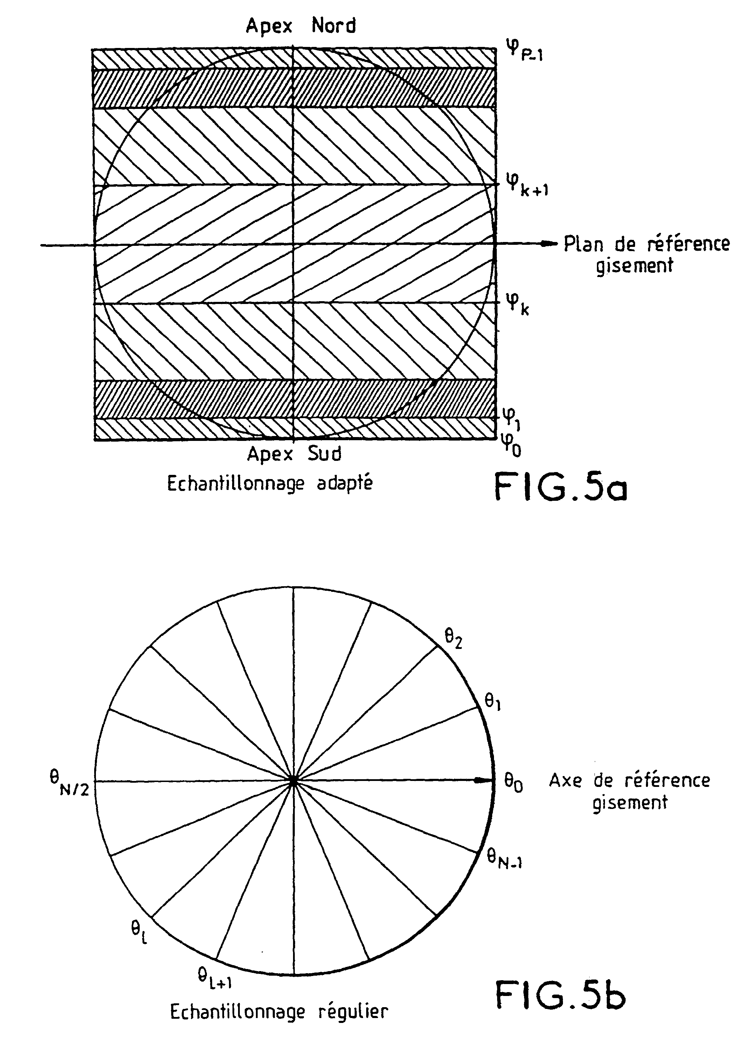

La projection des latitudes correspondant à ces égalités sur un plan passant par les apex est représentée en figure 5a.

La projection des méridiens sur le plan de référence est représenté en figure 5b.

P correspond au nombre de lignes de l'image plane en 2 D et N au nombre de colonnes. Le pixel définit par la ligne k et colonne l de l'image en 2 D correspond au pixel $P_{kl}$ sur la sphère.

Les pixels de la sphère les plus voisins de l'apex Nord et Sud correspondent respectivement à la première et dernière ligne de l'image, les pixels les plus voisins du méridien de référence correspondent à la première et dernière colonne de l'image.

L'échantillonnage de la surface de la sphère s'effectue donc :

- en longitude par une découpe de N méridiens telle que 2 méridiens successifs l et l + 1 ont des angles de gisement $\theta_l$ et $\theta_{l+1}$ tels que :

$$\theta_{l+1} - \theta_1 = \frac{2\pi}{N}$$

- en latitude par une découpe de P parallèles telle que 2 parallèles successifs k et k+1 on des angles de site $\varphi_k$ et $\varphi_{k+1}$ tels que :

$$\cos2\ \varphi_k - \cos2\varphi_{k+1} = \frac{2}{P}$$

Il est notable de remarquer que l'adaptabilité angulaire se fait essentiellement sur l'échantillonnage en site.

N et P correspondent à la résolution souhaitée, respectivement au nombre de lignes et de colonnes de l'image à obtenir en 2 dimensions.

L'échantillonnage de la surface de la sphère permet donc de définir des aires adaptées à chaque pixel ainsi associé. Un tampon sphérique, dont les cases mémoires correspondent à chacun de ces pixels de la surface sphérique et donc également de l'image finale en deux dimensions, mémorise les informations habituelles de distance, couleur, numéro de facette de chaque sommet projeté sur la surface de la sphère et de chaque clone crée.

L'étape n° 11 effectue une détermination du masque de projection correspondant au contour projeté fermé de la facette courante sur le tampon sphérique temporaire, c'est à dire courant.

La facette est projetée côté par côté sur la grille de pixels de la sphère pour donner ensuite une image plane en 2 D, représentation plane de la sphère obtenue par la correspondance des pixels de la sphère avec ceux de l'image plane comme indiqué précédemment et non pas projection plane. A partir des points de projection sur la sphère des sommets et des clones, sont déterminés les arcs de cercle et lignes droites les reliant. Dans le cas où la différence de gisement entre 2 points n'excède pas une valeur donnée, par exemple 2 à 3 pixels, on assimile la courbe à une droite dont le tracé s'effectue selon des algorithmes connus par exemple de type Bresenham. Dans l'autre cas, le tracé d'arcs de cercle s'effectue dans le tampon sphérique selon, par exemple, la méthode exposée ci-après qui permet également le calcul de la distance attribuée aux pixels correspondant à ce tracé.

Soient B et C les sommets définissant un segment ou un côté d'une facette; on peut définir un point M de ce segment par sa position paramétrique, c'est à dire relative à un paramètre k tel que :

$$\overrightarrow{AM} = k\ \overrightarrow{AB} + (1\text{-}k)\ \overrightarrow{AC}$$

Le plan $\pi$, passant par A et les apex, est incrémenté en gisement et l'on détermine pour chaque position, la valeur de k c'est à dire la position paramétrique du point M correspondant à l'intersection de ce plan $\pi$ avec le côté parcouru BC. Le plan $\pi$ contenant B correspond à k = 1, celui contenant C à k = 0.

A partir de cette valeur, le site du point M, intersection du plan $\pi$ avec le segment BC, est calculé, en tenant compte de l'équation vectorielle et de la formule de site $\varphi$ précédemment vue, permettant ainsi de positionner le point M de l'espace 3 D sur la surface sphérique et donc l'image plane en 2D. La distance associée à ce point est donnée en fonction de k :

$$|AM|^2 = k^2|AB|^2 + (1 - k)^2\ |AC|^2 + 2k(1 - k)\gamma$$

avec $\gamma$ le produit scalaire $\overrightarrow{AB}.\ \overrightarrow{AC}$ associé à B et calculé à l'étape 7 pour les deux sommets successifs B et C. Les valeurs $|AB|^2$ et $|AC|^2$ sont calculées à l'étape 7 également. Ces calculs, car une interpolation à partir de l'image plane en 2D ne donnerait pas de résultats exacts du fait qu'il ne s'agit pas dune projection plane.

Il est nécessaire d'obtenir un contour fermé pour la facette projetée sur la sphère. Ainsi, si 2 pixels successivement positionnés pour des incréments successifs du plan $\pi$ ne sont pas voisins dans le tampon sphérique, un traitement particulier est effectué : chacun des points correspondants est "élargi" en répétant le pixel avec un site, l'un incrémenté, l'autre décrémenté autant de fois qu'il est nécessaire pour qu'ils soient voisins, c'est à dire que l'un se trouve dans le 8-voisinage de l'autre.

Cette étape a ainsi permis de déterminer le contour projeté fermé de la facette ou masque de projection avec l'attribution des distances pour chacun des pixels du contour. Ces informations de distances sont mémorisées dans un tampon temporaire correspondant à la facette traitée, pour les pixels liés au contour de la facette. Le numéro de la facette et éventuellement les informations de couleurs, interpolées par exemple en fonction de k ou selon la méthode connue de Gouraud, sont également enregistrés dans le tampon.

L'étape suivante n° 12 permet, quant à elle, le "remplissage" de ce tampon temporaire, c'est à dire la détermination des pixels appartenant à l'intérieur du contour fermé puis, pour chacun de ces pixels, la détermination des distances de A au point correspondant de la facette.

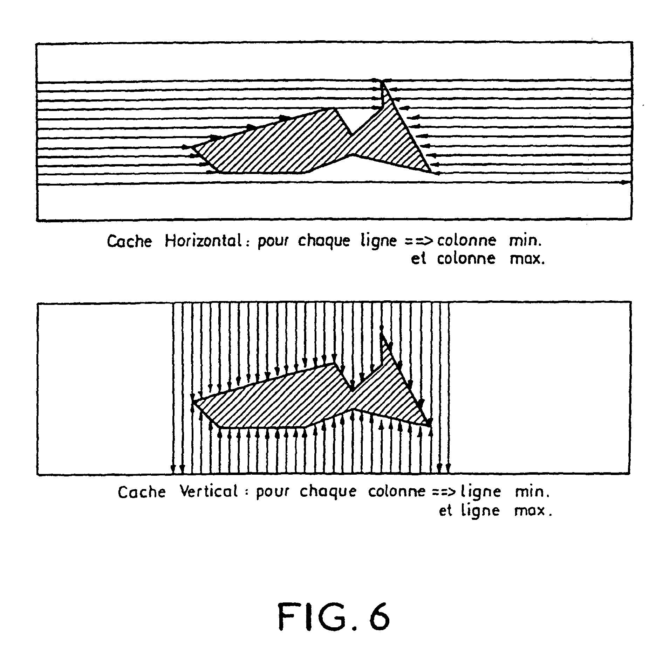

L'image en 2 D du contour est ainsi balayée horizontalement, ligne par ligne puis verticalement, colonne par colonne. Pour chaque ligne, l'intersection avec le contour définit une valeur inférieure et supérieure à l'extérieur desquelles est défini un cache. On fait de même pour chaque colonne. La superposition de ces 2 caches, c'est la méthode du double cache représentée à la figure 6, permet de définir les pixels à l'intérieur et sur le contour, pixels correspondant à la facette traitée.

Ainsi est représenté, d'une manière générale, tout type de facette définie par un polygone de N côtés dans l'espace en 3 D, sans trou, sur une surface plane après projection hémisphérique, en respectant donc la projection des côtés en arcs de cercle.

Une fenêtre de traitement, rectangle circonscrivant ce contour fermé est créée dans le tampon sphérique temporaire pour faciliter le traitement au niveau de l'image complète.

Dans un deuxième temps, pour chaque pixel à l'intérieur du contour correspondant a un numéro de ligne et de colonne donc à un site et un gisement déterminé, le tampon est rempli par le label associé à la facette et par la distance calculée de A au point correspondant à ce pixel sur la facette. Ce calcul est effectué selon un balayage de l'image ligne par ligne, c'est à dire à site constant : pour un site donné sont déterminés, selon la méthode précédemment exposée, les distances et gisements des extrémités d'un segment correspondant à des points du contour de la facette. Il s'agit ensuite d'un calcul d'un point A à un point P d'une droite, P défini par le gisement du plan $\pi$. La couleur peut également être mémorisée dans le tampon sphérique temporaire pour chacun des pixels après avoir été calculée, par exemple, par interpolation selon la méthode connue de Gouraud.

L'étape suivante 13 est une comparaison de ce tampon sphérique temporaire avec un tampon appelé tampon de référence.

Ce tampon de référence, associé à l'image complète est initialisé puis rempli et actualisé au fur et à mesure du traitement des facettes. Ce tampon est comparé, pixel par pixel, au tampon temporaire pour ne conserver dans le tampon de référence, que les informations distance, label et éventuellement couleur, correspondant au pixel le plus proche. La distance, label et couleur du tampon sphérique temporaire ne sont écrits dans le tampon sphérique de référence que si la distance du pixel du tampon temporaire est inférieure à celle du pixel correspondant du tampon de référence.

De plus un traitement morphologique peut être effectué pour réduire les erreurs d'appartenance de frontières liées à cette méthode. Une érosion morphologique consiste par exemple à annuler tout premier pixel rencontré appartenant à la facette et succédant à un pixel n'y appartenant pas lors du balayage de ligne, évitant ainsi une surestimation des aires des facettes dues à l'association d'une aire à un point projeté. L'étape 14 vérifie que toutes les facettes sélectionnées ont été traitées. Sinon l'étape 6 permettant de passer à la facette suivante et les étapes de traitement 3 à 14 sont à nouveau effectuées.

Lorsque toutes les facettes ont été traitées, le tampon sphérique obtenu constitue l'image sphérique utile.

Ce tampon est une mémoire qui contient, entre autre, sous forme physique, les informations sur chacun des points de l'image, de sorte que cette image synthétique modélisée avant capteur peut être utilisée, par simulation du système optique, pour visualiser une image finale sur écran.

Cette image synthétique permet d'obtenir une image très fidèle et naturelle et ainsi de générer des scènes très proches de la réalité.

Ce procédé de génération d'images de synthèse donne comme résultat final une "image de visibilité " . Celle-ci peut aussi bien servir comme image de synthèse finale pouvant être visualisée jusqu'à 360° que comme image synthétique de distance ou comme modèle de calcul de la radiosité.

Cette image de synthèse peut ainsi être utilisée pour générer une image stéréoscopique ou une séquence stéréoscopique FR 2 724 033, ou bien pour effectuer tout type de mixages par exemple avec des images réelles ou encore, de par l'évaluation des facteurs de forme, pour modéliser les échanges d'énergie lumineuse dans le domaine de la radiosité.

## Revendications

**1.** Procédé de génération d'images de synthèse d'une scène en 3 dimensions constituée d'un ensemble de facettes, vue d'un point d'observation A et selon un axe de vue, **caractérisé en ce qu'**une projection des facettes est effectuée sur la surface d'une sphère dont le centre est le point d'observation de la scène (7) et **en ce qu'**un découpage particulier de la surface de la sphère en aires élémentaires (10), chacune correspondant a un pixel sur la surface sphérique, est effectué de manière que les projections orthogonales de ces aires sur un plan de référence passant par A et perpendiculaire à l'axe de vue de la scène ont même valeur.

2. Procédé selon la revendication 1, **caractérisé en ce que** les cas d'ambiguïté générés par la représentation plane de la surface sphérique lorsque des points projetés provenant des sommets ou côtés des facettes sont confondus avec le méridien de coupure (8), défini comme une ligne de coupure de la surface sphérique correspondant à la première et dernière colonne de l'image plane, ses extrémités, les apex, correspondant à la première et dernière ligne, sont levés par la création de points clones (9) consistant à doubler les points projetés sur ce méridien pour être traités comme sommets de facettes lors de la détermination des côtés des facettes projetées.

3. Procédé selon la revendication 1, **caractérisé en ce que**, lorsque un des apex appartient à l'espace angulaire de la facette projetée (8), deux points clones sont créés (9) avec le site de l'apex correspondant et des angles de gisement adjacents pour être traités comme sommets de facette lors de la détermination des côtés des facettes projetées.

4. Procédé selon la revendication 1,2 ou 3, **caractérisé en ce que** le tracé des côtés de la facette (11) sur la surface sphérique et les calculs de distance des points les constituant au point de vue A (11) est effectué en attribuant à chaque sommet B de la facette, le carré de sa distance à A, le produit scalaire $\overrightarrow{AB} . \overrightarrow{AC}$, C étant le sommet suivant selon l'ordre de parcours des sommets de la facette et en incrémentant un plan contenant l'axe vertical de la sphére définissant l'intersection M de ce plan avec le côté courant traité BC par sa position paramètrique k par rapport à celles englobant les sommets B et C.

5. Procédé selon la revendication 1,2 et 3, **caractérisé en ce qu'**il consiste en :

   - une projection de la facette sélectionnée sur une sphére de projection (7)
   - une découpe de la facette projetée en créant des points clones assimilés à de nouveaux sommets sur la sphère lorsqu'un des côtés ou sommet de la facette traverse le méridien de coupure ou lorsqu'un des apex appartient à l'espace angulaire de la facette (8,9),
   - une transposition de l'image sphérique en image plane en associant chaque pixel de la sphère défini par la découpe de sa surface en aires élémentaires et par sa position l en site et c en gisement, à un pixel de l'image plane défini par sa ligne l et colonne c (10), les apex et méridien de coupure correspondant aux positons extrêmes respectivement des lignes et colonnes,
   - une détermination de chaque côté de la facette projetée reliant les sommets projetés en incrémentant le gisement d'un plan contenant l'axe vertical de la sphère entre les gisements des 2 plans incluant les sommets et déterminant le site du point d'intersection de ce plan avec le côté de la facette traité (11).
   - un remplissage d'un tampon sphérique temporaire correspondant à la facette traitée mémorisant, pour chaque pixel de la facette projetée, la distance, label et éventuellement couleur de chaque point de l'espace lié à ce pixel (12).
   - une comparaison, en fonction des distances associées à chaque pixel, du tampon sphérique temporaire avec un tampon sphérique de référence correspondant à l'image complète (13).

6. Procédé selon la revendication 5 **caractérisé en ce qu'**un traitement d'érosion morphologique est effectué sur l'image plane obtenue pour la facette courante traitée.

7. Procédé selon la revendication 1, **caractérisé en ce que** le point d'observation correspond à une source lumineuse et l'axe de vue correspond à l'axe principal de rayonnement, pour être exploité dans la modélisation de la propagation d'énergie dans la scène en 3 dimensions.

**Patentansprüche**

1. Verfahren zur Erzeugung von synthetischen Bildern einer dreidimensionalen Szene aus einem Satz von Facetten, gesehen von einem Betrachtungspunkt A und entlang einer Betrachtungsachse,
   **dadurch gekennzeichnet, dass**
   die Facetten auf die Oberfläche einer Kugel projiziert werden, deren Mittelpunkt der Betrachtungspunkt der Szene (7) ist und dass eine besondere Aufteilung der Oberfläche der Kugel in elementare Flächen (10) erfolgt, wobei jede einem Pixel auf der Kugeloberfläche entspricht, und derart erfolgt, dass die orthogonalen Projektionen dieser Flächen auf eine Referenzebene, die durch den Betrachtungspunkt A und senkrecht zu der Betrachtungsachse der Szene verläuft, denselben Wert aufweisen.

**2.** Verfahren nach Anspruch 1, **dadurch gekennzeichnet, dass** die Fälle der Mehrdeutigkeit, die durch die ebene Darstellung der sphärischen Oberfläche erzeugt werden, wenn die projizierten Punkte den Gipfeln oder den Seiten der Facetten entsprechen, mit dem Schnittmeridian (8) übereinstimmen, der als eine Schnittlinie der sphärischen Oberfläche entsprechend der ersten und der letzten Spalte des ebenen Bildes, ihre der ersten und der letzten Zeile sphärischen Oberfläche definiert ist, ihre Seiten (Pole), die der ersten und der letzten Zeile entsprechen, durch die Bildung einer Verdoppelung der Punkte verarbeitet wird, die auf diesen Meridian projiziert werden, und dann während der Bestimmung der Seiten der projizierten Flächen als Gipfel von projizierten Facetten verarbeitet werden.

**3.** Verfahren nach Anspruch 1, **dadurch gekennzeichnet, dass** dann, wenn einer der Pole zu dem Winkelabstand der projizierten Facette (8) gehört, zwei Clonepunkte (9) gebildet werden, die die Elevation des entsprechenden Pols haben und angrenzenden Pfeilwinkel entsprechen und während der Bestimmung der Seiten der projizierten Facetten als Gipfel der Facette verarbeitet werden.

**4.** Verfahren nach Anspruch 1, 2 oder 3, **dadurch gekennzeichnet, dass** der Weg der Seiten der Facette (11) auf der sphärischen Oberfläche und die Berechnungen des Abstands der Punkte für den Betrachtungspunkt A (11) dadurch erfolgen, indem jedem Gipfel B der Facette das Quadrat ihres Abstands bei A und das Skalarprodukt $\overrightarrow{AB}$, $\overrightarrow{AC}$ zugeordnet werden, wobei C der nächste Gipfel entsprechend der Reihenfolge der Länge der Gipfel der Facette ist und durch Inkrementierung einer Ebene, die die Vertikalachse der Halbkugel enthält, die den Schnittpunkt M dieser Ebene mit der laufenden Seite enthält, die verarbeitete BC durch ihre parametrische Lage k relativ zu derjenigen, die die Gipfel B und C umfassen.

**5.** Verfahren nach Anspruch 1, 2 oder 3, **gekennzeichnet durch** folgende Schritte:

- eine Projektion der gewählten Facette auf eine Projektionskugel (7),
- ein Schnitt der projizierten Facette **durch** Bildung von Clonepunkten mit neuen Gipfeln auf der Kugel, wenn eine der Seiten oder der Gipfel der Facette den Schnittmeridian kreuzt oder wenn einer der Pole zu dem Winkelraum der Facette (8, 9) gehört,
- eine Umsetzung des kugelförmigen Bildes in ein ebenes Bild **durch** Zuord-nung jedes Pixels der Kugel, das **durch** die Aufteilung ihrer Fläche in elementare Flächen und **durch** ihre Elevationslage l und deren Traglage c mit einem Pixel des ebenen Bildes gebildet wird, definiert **durch** seine Zeile 1 und Spalte c (10), wobei die Pole und der Schnittmeridian den extremen Lagen relativ zu den Zeilen und Spalten entsprechen,
- Bestimmung jeder Seite der projizierten Facette, die die projizierten Gipfel **durch** Inkrementierung der Peilung einer Ebene, die die Vertikalachse der Kugel zwischen den Lagerungen der beiden die Gipfel enthaltenen Ebenen enthält, verbindet, und Bestimmung der Elevation des Schnittpunktes dieser Ebene mit der Seite der verarbeiteten Facette (11),
- Füllung eines temporären sphärischen Puffers entsprechend der verarbeiteten Facette, die für jedes Pixel der projizierten Facette den Abstand, das Label und gegebenenfalls die Farbe jedes Punktes des zu diesem Pixel (12) gehörenden Raums speichert,
- Vergleich, in Abhängigkeit von den Abständen zwischen jedem Pixel des temporären sphärischen Puffers und einem sphärischen Referenzpuffer entsprechend dem vollständigen Bild (13).

**6.** Verfahren nach Anspruch 5, **dadurch gekennzeichnet, dass** eine Behandlung der morphologischen Erosion auf dem ebenen Bild für die verarbeitete laufende Facette erfolgt.

**7.** Verfahren nach Anspruch 1, **dadurch gekennzeichnet, dass** der Beobachtungspunkt einer Lichtquelle und die Betrachtungsachse der Hauptachse der Strahlung entspricht, um in dem Modeling der Verbreitung der Energie in der dreidimensionalen Szene ausgewertet zu werden.

**Claims**

**1.** Method of generating synthesis images of a three-dimensional scene consisting of a set of facets, seen from an observation point A and along a viewing axis, **characterized in that** the facets are projected onto the surface of a sphere whose centre is the observation point of the scene (7) and **in that** the surface of the sphere is cut specifically into elementary areas (10), each one corresponding to a pixel on the spherical surface, so that the orthogonal projections of these areas onto a reference plane passing through A and perpendicular to the viewing axis of the scene have the same value.

**2.** Method according to Claim 1, **characterized in that** the ambiguities generated by the plane representation of the spherical surface when the projected points coming from the peaks or sides of the facets are coincident with the cutting meridian (8), defined as a line cutting the spherical surface corresponding to the first and last column of the plane image, its ends, the apexes, corresponding to the first and last row, are raised by the creation of clone points (9) consisting in doubling the points projected onto this meridian in order to be processed as peaks of facets when determining the sides of the projected facets.

**3.** Method according to Claim 1, **characterized in that**, when one of the apexes belongs to the angular space of the projected facet (8), two clone points (9) are created with the elevation of the corresponding apex and adjacent bearing angles in order to be processed as facet peaks when determining the sides of the projected facets.

**4.** Method according to Claim 1, 2 or 3, **characterized in that** the plots of the sides of the facet (11) on the spherical surface and the calculations of distance of the points forming them from the viewing point A (11) is carried out by allocating, to each peak B of the facet, the square of its distance from A, the scalar product $\overrightarrow{AB} \cdot \overrightarrow{AC}$, where C is the following peak according to the order of traversal of the peaks of the facet and by incrementing a plane containing the vertical axis of the sphere defining the intersection M of this plane with the current side BC processed by its parametric position k with respect to those encompassing the peaks B and C.

**5.** Method according to Claim 1, 2 and 3, **characterized in that** it consists of:

- projecting the selected facet onto a projection sphere (7),
- cutting the projected facet by creating clone points similar to new peaks on the sphere when one of the sides or peak of the facet crosses the cutting meridian or when one of the apexes belongs to the angular space of the facet (8, 9),
- transposing the spherical image into a plane image by combining each pixel of the sphere, defined by cutting its surface into elementary areas and by its elevational position 1 and bearing position c, with a pixel from the plane image defined by its row 1 and column c (10), the apex and cutting meridian corresponding to the extreme positions of the rows and columns, respectively,
- determining each side of the projected facet connecting the projected peaks by incrementing the bearing of a plane containing the vertical axis of the sphere between the bearings of the two planes including the peaks and determining the elevation of the point of intersection of this plane with the side of the processed facet (11),
- filling a temporary spherical buffer corresponding to the processed facet storing, for each pixel of the projected facet, the distance, label and possibly colour of each point in space associated with this pixel (12),
- comparing, as a function of the distances associated with each pixel, the temporary spherical buffer with a reference spherical buffer corresponding to the complete image (13).

**6.** Method according to Claim 5, **characterized in that** morphological erosion processing is carried out on the plane image obtained for the current facet processed.

**7.** Method according to Claim 1, **characterized in that** the observation point corresponds to a light source and the viewing axis corresponds to the main radiation axis, in order to be exploited in modelling the propagation of energy in the three-dimensional scene.

Base de
données 3D+T — 1

2 — Sélection du point de projection courant
Présélection des facettes
Initialisation du type d'accès
Initialisation des tampons

6
Incrément
d'accès

3
Accès aux données de la facette courante

Changement de repère — 4

Sélection d'orientation — 5

Projection centrale
Changement de repère — 7

De l'étape 14

8 — Nécessité
de découpe
? — NON

OUI

Découpe — 9

Passage en coordonnées
tampon sphérique — 10

Détermination du masque
de projection — 11

## FIG. 1a

Vers étape 12

## FIG. 1

De l'étape 11

Interpolation des distances.
Remplissage du tampon sphérique
temporaire — 12

Comparaison avec le tampon
sphérique de référence et mise
à jour du tampon sphérique
de référence — 13

Vers l'étape 6

NON — Toutes
les facettes
traitées
? — 14

OUI

Image sphérique
utile — 15

## FIG. 1b

## FIG. 1

FIG.2

FIG.3

FIG.4

Apex Nord

$\varphi_{P-1}$

$\varphi_{k+1}$

Plan de référence
gisement

$\varphi_k$

$\varphi_1$
$\varphi_0$

Apex Sud

Echantillonnage adapté

# FIG.5a

$\theta_2$

$\theta_1$

$\theta_{N/2}$

$\theta_0$  Axe de référence
gisement

$\theta_{N-1}$

$\theta_L$

$\theta_{L+1}$

Echantillonnage régulier

# FIG.5b

Cache Horizontal : pour chaque ligne ==> colonne min.
et colonne max.

Cache Vertical : pour chaque colonne ==> ligne min.
et ligne max.

# FIG. 6